# EUROPÄISCHE PATENTSCHRIFT

(11) **EP 1 857 385 B1**
(45) Veröffentlichungstag und Bekanntmachung des Hinweises auf die Patenterteilung: **03.03.2010**
(21) Anmeldenummer: 07015259.0
(22) Anmeldetag: 14.10.2005
(51) Int. Cl.: B65G 53/52, F16L 21/06, F16L 17/04

(54) **Rohrverbindungsanordnung**
Pipe connection assembly
Agencement de jonction de conduites

(30) Priorität: 18.10.2004 DE 102004050843
(43) Veröffentlichungstag der Anmeldung: 21.11.2007
(62) Teilanmeldung aus: 05022473.2
(73) Patentinhaber: S.S.T.-Schüttguttechnik GmbH, 86899 Landsberg a. Lech (DE)
(72) Erfinder: Linder, Hermann J., 86938 Schondorf (DE)
(74) Vertreter: Mollekopf, Gerd Willi

(56) Entgegenhaltungen:
- EP-A- 0 918 183
- EP-A1- 0 763 688
- DE-A1- 3 123 931
- US-A- 4 601 495
- US-A- 5 794 988

## Beschreibung

Die Erfindung betrifft eine Anordnung zum Verbinden von Rohrenden, und ein Verfahren zur Herstellung einer solchen Rohrverbindungsanordnung.

Aus der DE 21 16 972 A1 ist ein Aktivator für pneumatische Förderanlagen bekannt. Es ist ein längeres Rohrstück mit Flanschen an beiden Enden vorgesehen, bei dem in einem Teilbereich radiale Löcher durch die Rohrwandung zum Einleiten für Druckluft ausgebildet sind. Im Bereich der Löcher durch die Rohrwandung wird eine Manschette aus zwei Halbschalen über dem Rohrleitungsabschnitt montiert. In die Manschette wird Druckluft eingeleitet, die sich in einem Druckluftraum zwischen Manschetteninnenseite und Rohraußenseite ausbreitet und durch die Bohrungen in der Rohrwandung ins Rohrinnere eindringt. Um das Austreten von Feststoffpartikeln durch die Bohrungen zu verhindern, ist die Rohrwandung im Bereich der Bohrungen durch ein Filter abgedeckt.

Auch die DE 31 23 931 A1 beschreibt eine Vorrichtung zum Einspeisen eines Druckmediums in eine Rohrleitung. Bei dieser Vorrichtung kann eine vorhandene Rohrleitung in einem vorgegebenen Rohrleitungsabschnitt mehrfach durchbohrt werden, so dass von der Außenseite nach innen Druckluft zuführbar ist. Über dem durchbohrten Abschnitt wird eine Manschette mit zwei Halbschalen aufgeschraubt, die in axiale Richtung durch O-Ringe zur Rohrleitung abgedichtet ist. Auch hier verteilt sich die Druckluft zwischen Stegen in einer Druckkammer zwischen der Manschetteninnenseite und der Rohrleitungsaußenseite. Die Bohrungen in der Rohrwand sind durch ein Filter abgedeckt, das zusätzlich durch eine Lochplatte verstärkt wird. Die Lochplatte wird wiederum in radiale Richtung durch die Stege an der Innenseite der Manschette gestützt.

Bei der Fördereinrichtung der GB 2 266 874 A wird als Förderhilfe bei einem Rohrleitungsabschnitt Druckluft eingeblasen. Zwei beabstandete Rohrenden einer Leitung sind durch eine zylindermantelförmige Düse zum Einleiten der Druckluft miteinander verbunden. Über die Rohrenden und die Düse ist eine Zylindermantelhülse zur Ausrichtung und Stabilisierung der Düse geschoben. An den Stirnflächen der Zylindermantelhülse sind beidseitig zwei Halbringe angeschraubt, die in Nuten greifen, die an den Rohrenden ausgebildet sind. Durch das Anschrauben der Halbringe an die Zylindermantelhülse drücken die Halbringe die Rohrenden axial zueinander, so dass die Stirnseiten der Rohrenden O-Ringe dichtend gegen die Stirnseiten der Düse pressen.

Die DE 100 32 074 C1 beschreibt einen zweimantligen Rohrbogen mit zwei anflanschbaren Enden. Ein Innenbogen verläuft in einem Außenbogen und wird darin über Bolzen zentriert gehalten. Der Außenbogen ist mit Außenhülsen der Flanschenden verschweißt. In den Außenhülsen der Flanschenden sitzen zentriert Innenhülsen. Zum Anflanschen des Rohrbogens an Rohrenden sind an jedem Flanschende Kupplungsnuten vorgesehen.

Die EP 0 918 183 A1 beschreibt eine Verbindungsvorrichtung für Glasfaserrohre bei der zwei Rohrenden mittels Manschetten und Rohrsicherungselementen, wie z.B. Seeger-Ringen, verbunden sind. Diese Rohrverbindungsanordnung entspricht dem Oberbegriff des Anspruchs 1.

Es ist Aufgabe der Erfindung, eine Rohrverbindungsanordnung und ein Verfahren zur Verbindung von Rohrenden vorzusehen, bei der bzw. bei dem eine axiale Fixierung der Rohrenden ohne aufwändige Vorbereitung der Rohrenden ermöglicht wird.

Diese Aufgabe wird mit den Merkmalen des Anspruchs 1 bzw. 9 gelöst. Vorteilhafte Ausgestaltungen sind Gegenstand von Unteransprüchen.

Gemäß Anspruch 1 werden bei einer Rohrverbindungsanordnung zumindest zwei Rohrenden durch Aufsetzen einer zumindest zweiteiligen Rohrmanschette über die zumindest zwei Rohrenden miteinander verbunden. Die Rohrmanschette weist Ausnehmungen entsprechend der Anzahl der zu verbindenden Rohrenden auf, wobei jeweils eine Ausnehmung das Rohrende an dessen Außenumfang bzw. Außenwand umgreift bzw. umfasst. An der Außenwand bzw. am Außenumfang jedes der Rohrenden ist zumindest eine Eintiefung ausgebildet. Die Eintiefung kann auch als Vertiefung bezeichnet werden, bzw. die Vertiefung als Eintiefung, wobei hier die Begriffe 'Eintiefung' und 'Vertiefung' lediglich der Unterscheidung dient, dass die jeweilige Vertiefung bzw. Eintiefung an einem anderen Teil der Anordnung ausgebildet ist (siehe unten). In die Eintiefung greift beim Zusammensetzen der Rohrmanschette über den Rohrenden ein an der Innenseite der Ausnehmung angeordnetes Bogenelement ein. Oder es wird gemäß der unten beschriebenen Ausgestaltung ein separates Bogenelement in die Eintiefung eingesetzt und beim Zusammensetzen der Rohrmanschette formschlüssig (bezüglich einer axialen Verschiebung) mit der Rohrmanschette verbunden. Das zumindest eine Bogenelement kann einteilig mit der Rohrmanschette verbunden sein, an dieser montiert sein oder formschlüssig in diese eingesetzt sein. Bogenelemente und Rohrmanschette können aus dem gleichen oder aus unterschiedlichem Material ausgebildet sein.

Durch das Bogenelement wird jeweils eine mechanische Verbindung gegen ein axiales Verschieben des Rohrendes innerhalb der zusammengesetzten Rohrmanschette bewirkt. Die radiale Festlegung der Rohrenden gegenüber der Rohrmanschette erfolgt durch das Umgreifen des Rohrendes durch die Rohrmanschette. Damit ist neben der oder den Eintiefungen an den Rohrenden keine weitere Präparation der Rohrenden erforderlich, um eine mechanisch stabile Festlegung des Rohrendes an der Manschette zu erreichen. In vorteilhafter Ausgestaltung ist das Rohrende ein flanschloses Rohrende, also ein außer der Eintiefung nicht weiter bearbeitetes Rohrendstück. Damit wird es durch die Rohrverbindungsanordnung ermöglicht, eine bestehende Rohrverbindung beispielsweise zu Wartungszwecken aufzutrennen und anschließend nach dem Einbringen der Eintiefungen an den Rohrenden mittels der Rohrmanschette auf einfache Weise wieder miteinander zu verbinden. Es muss daher am Rohrende kein Saum oder Flansch aufgeschweißt, aufgeklebt oder montiert werden, um eine Verbindung zwischen den Rohrenden herzustellen.

Gemäß einer besonders vorteilhaften Ausgestaltung ist an der Innenseite jeder der Ausnehmungen der Rohrmanschette zumindest eine Vertiefung ausgebildet. In eine der Vertiefungen ist ein oder sind mehrere Bogenelemente teilweise einsetzbar, wobei die oder das Bogenelement aus der Vertiefung im eingesetzten Zustand hervorsteht und der hervorstehende Teil zumindest teilweise in die Eintiefung eingreift, wenn die Rohrverbindungsanordnung zusammengesetzt bzw. montiert ist. Das heißt, wenn das Bogenelement in die Eintiefung am Rohrende eingesetzt ist, steht das Bogenelement über den Außenumfang des Rohrendes hervor und die Rohrmanschette mit ihrer Vertiefung wird so über das Rohrende mit dem Kopplungselement aufgesetzt, dass der hervorspringende Teil des Bogenelements in die Vertiefung der Rohrmanschette zumindest teilweise eingreift.

Die Randbereiche um die Vertiefung und die Eintiefung können im montierten Zustand durch einen Spalt voneinander getrennt sein oder die Randbereiche können spaltlos aufeinander zu liegen kommen, so dass das oder die Bogenelemente vollständig in der Vertiefung und Eintiefung aufgenommen sind.

Erfindungsgemäß ist am Rohrende ein Schlitz vorgesehen bzw. zumindest zwei gegenüberliegende Schlitze, in die ein Bogenelement eingesteckt wird bzw. werden. An der Innenseite der Ausnehmungen ist dann beispielsweise eine umlaufende Nut vorgesehen. Dabei ist das Einbringen von Schlitzen am Rohrende sehr einfach zu bewirken, indem beispielsweise lediglich mit einer Säge bis zu einer gewünschten Tiefe in die Rohrwandung gesägt wird, der Schlitz somit ein einfach herzustellender Sägeschnitt ist. Vorteilhaft geht dabei die Schnitttiefe über die Wandstärke hinaus, so dass an einem Bogensegment am Innenradius des Rohrendes ebenfalls ein Schlitz entsteht. Damit lässt sich ein Bogenelement besonders tief in das Rohrende einbringen und eine entsprechend stabile Fixierung der Rohrmanschette am Rohrende erreichen. Da der Innenradius des Bogenabschnitts des Kopplungselements an den Innenradius des Rohrendes angepasst ist, wird der freie Querschnitt im Rohrende durch das Bogenelement nicht verkleinert.

Ganz besonders vorteilhaft wird vor dem Zusammensetzen der Rohrmanschette über den Rohrenden ein Dichtelement über das Rohrelement geschoben, so dass das Dichtelement die Dichtwirkung durch Anlage am Außenumfang des jeweiligen Rohrendes und an der Innenseite der zugehörigen Ausnehmung entfaltet. Bezüglich der Verbindungsstelle kann das Dichtelement vor oder hinter dem Bogenelement angeordnet sein, wobei letzteres besonders vorteilhaft dann erfolgt, wenn die Eintiefung am Rohrende durch die Rohrwand hindurchgeht, so dass mittels der Dichtung nicht nur die Trennstelle zwischen den Rohrenden sondern auch ein Durchbruch durch die Rohrwand abgedichtet wird.

Die Rohrverbindungsanordnung kann zur Verbindung mehrer aufeinander zulaufender Rohrenden verwendet werden, beispielsweise ist die Manschette T-förmig ausgebildet, so dass über die Rohrverbindungsanordnung eine T-Verbindung herstellbar ist. Die Rohrverbindung kann auch als winkelförmige Verbindung zur Verbindung zweier unter einem Winkel zueinander stehender Rohre ausgebildet sein oder dergleichen.

In Ausgestaltung kann mit der Manschette ein Rohrstück zwischen den Stirnseiten der Rohrenden gefasst sein, wobei das Rohrstück ebenfalls geradlinig als Krümmer, als T-Stück oder dergleichen ausgebildet ist, um eine entsprechende Anzahl von Rohrenden bzw. Winkelstellungen von Rohrenden miteinander zu verbinden. Mittels des eingesetzten Rohrstücks wird beispielsweise bei gleichen Innendurchmessern der Rohrenden und der entsprechenden Enden des Rohrstücks eine barrierefreie Strömung durch die Rohrverbindungsanordnung erreicht.

Besonders eignet sich die Rohrverbindungsanordnung zur Verbindung bzw. Wiederverbindung von bereits starr installierten Rohren, die nicht mehr gegeneinander verschoben werden sollen. Damit kann eine bestehende Rohrleitung ohne großen Montageaufwand beispielsweise um eine Aktivatoranordnung erweitert werden oder bei Verwendung einer Rohrmanschette mit mehr als zwei Rohrausnehmungen kann die bestehende Leitung um einen weiteren Anschluss bzw. Abzweig erweitert werden.

In weiterer Ausgestaltung sind die Ausnehmungen zum Umgreifen der zumindest zwei Rohrenden mit unterschiedlichen Durchmessern ausgebildet, so dass zumindest ein Rohr mit einem von den anderen Rohren abweichenden Durchmessern an das eine oder die anderen Rohrenden angeschlossen werden kann.

Unter dem Begriff Rohrende ist hier auch ein Schlauchende zu verstehen, das durch die Ausnehmung der Rohrmanschette greifbar ist, wobei das Schlauchende entweder eine ausreichende Eigenstabilität aufweist, ohne bei Belastung zusammenzufallen, oder in Ausführung in das Schlauchende eine Hülse eingesetzt wird, um das Schlauchende zu stabilisieren. Im letzteren Fall ist vorteilhaft die Eintiefung sowohl in das Schlauchende als auch in die Hülse eingebracht, so dass mittels der Hülse sowohl eine radiale als auch eine axiale Festlegung des Schlauchendes in der Rohrverbindungsanordnung erfolgt.

Ganz besonders vorteilhaft ist die Rohrverbindungsanordnung als Vorrichtung zum Einspeisen eines Druckmediums oder als Aktivatoranordnung ausgebildet, wobei die Verbindung zwischen der Ausnehmung der Rohrmanschette und den Rohrenden gemäß Anspruch 1 ausgebildet ist.

Bei einer Vorrichtung, bei der die Rohrverbindungsanordnung verwendet werden kann, ist eine zumindest zweiteilig zusammensetzbare Rohrmanschette vorgesehen, in der ein Rohrstück mit Bohrungen zum Durchleiten eines Druckmediums angeordnet ist. Das Rohrstück ist kürzer als die Länge der Rohrmanschette, so dass beidseitig ein Abschnitt der Rohrmanschetteninnenfläche über das eingesetzte Rohrstück hinausragt. Mit diesen Endabschnitten kann die Rohrmanschette zwei gegenüberliegende Rohrenden verbindend umschließen. Damit kann der innerhalb der Rohrleitung zu fördernde Feststoff von einem Rohrende durch die Manschette hindurch zum nächsten Rohrende befördert werden. Das vor der Montage lose Rohrstück kann als solches unter optimierten Bearbeitungsbedingungen zum Einsatz in der Vorrichtung vorbereitet und mit geeigneten Öffnungen versehen werden. Bei der Bearbeitung ist dabei das vergleichsweise kurze Rohrstück leicht handhabbar, wobei beispielsweise in einem vorhandenen Rohrstück Bohrungen eingebracht werden oder das Rohrstück als Ganzes in einem Spritzguss- oder Gussverfahren unmittelbar mit Öffnungen versehen wird. Das Material des Rohrstücks kann dabei unabhängig von dem Material und den Dimensionen der zu verbindenden Rohrenden gewählt werden. Beispielsweise kann das Rohrstück bei hoher druckmechanischer Belastung im Bereich der Öffnungen eine stärkere Rohrwandung aufweisen als die anschließenden Rohrenden oder aus einem hochfesten oder teilelastischen Material hergestellt sein.

Zum Zusammensetzen der mehrteiligen Rohrmanschette werden die Teile zusammengeschraubt, miteinander verklebt, miteinander verrastet, verklammert, mittels Schnappverbindung gesichert oder dergleichen. Vorteilhaft sind die Teile der Rohrmanschette zueinander abgedichtet, so dass kein Medium in die Rohrverbindung eindringt oder das in den Rohren geführte Medium aus der Manschette austritt. Als Dichtelemente können beispielsweise eine Dichtfolie, ein vorgeformter Dichtgummi, aushärtenden Dichtflüssigkeit, zähflüssige Dichtflüssigkeit, Metalldichtungen, Verklebungen oder dergleichen verwendet werden. Diese sind z.B. zwischen die Anlagenflächen gelegt, an denen die Manschettenteile im zusammengesetzten Zustand aufeinander zu liegen kommen.

Mit einer Aktivatoranordnung mit der oben beschriebenen Vorrichtung und den Rohrenden vereinfacht sich die Wartung erheblich, da das von der Manschette umfasste Rohrstück nach Lösen der Rohrmanschette aus dem Rohrleitungsabschnitt entfernt und an einem geeigneten Reinigungsplatz gereinigt oder einfach ein gereinigtes oder neues Austausch-Rohrstück anstelle des alten Rohrstücks eingesetzt wird. Einerseits verringern sich dadurch die reinen Wartungsintervalle, während derer der Feststofftransport eingestellt werden muss, erheblich, und andererseits kann eine besonders intensive Reinigung auch an normalerweise unzugänglichen Stellen durchgeführt werden, wenn beispielsweise die Förderung auf eine andere Feststoffsubstanz umgestellt wird.

Eine Aktivatoranordnung wie oben angegeben eignet sich auch zur besonders schnellen Nachrüstung einer bereits vorhandenen Rohrleitung mit dem Aktivator.

Die Vorrichtung zum Einspeisen oder Anlegen eines Druckmediums bzw. die Aktivatoranordnung dient zur Verbindung mehrerer Rohrenden miteinander, wobei beispielsweise eines der zu verbindenden Rohrenden der Zufuhranschluss für das einzuleitende Druckmedium ist.
Die Figuren 1A bis 4 dienen der Erläuterung der Erfindung, von der Ausführungsbeispiele in den Fig. 5 bis 9 dargestellt sind. Es zeigen:
- Fig. 1A: einen Querschnitt durch ein Relaiselement, das zwei Rohrenden miteinander verbindet,
- Fig. 1B: eine Seitenansicht der Anordnung von Fig. 1A,
- Fig. 2: eine Seitenansicht in axialer Richtung der Anordnung von Fig. 1A,
- Fig. 3: eine Detailansicht aus der Anordnung von Fig. 1A,
- Fig. 4: eine Explosionsdarstellung der Anordnung von Fig. 1A, und
- Fig. 5: einen Querschnitt durch ein Relaiselement gemäß einer Ausgestaltung mit einer erfindungsgemäßen Rohrverbindungsanordnung,
- Fig. 6: eine Seitenansicht eines Ringbogens der Anordnung von Fig. 5,
- Fig. 7: einen Explosionsdarstellung der Anordnung von Fig. 5,
- Fig. 8: einen Detailausschnitt aus Fig. 5 im Bereich der Verbindung Rohr/Manschette, und
- Fig. 9: einen Querschnitt durch eine erfindungsgemäße Rohrverbindungsanordnung.

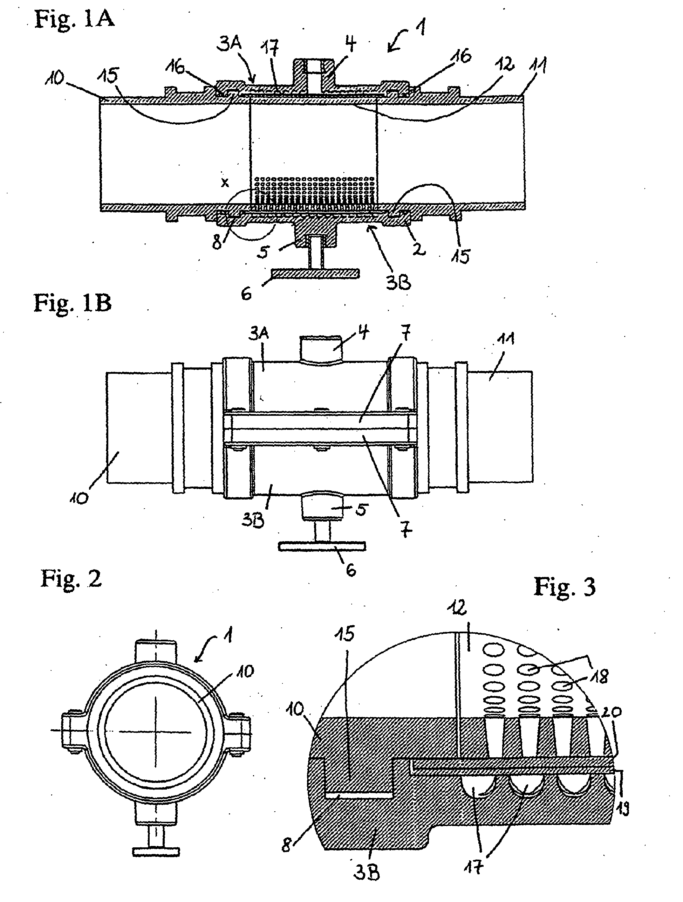

Fig. 1A zeigt eine Querschnittsansicht eines Relaiselements 1 oder Aktivators, der ein erstes Rohrende 10 mit einem zweiten Rohrende 11 verbindet. Das Gehäuse des Relaiselements 1 wird durch eine Manschette bzw. Muffe 2 aus zwei Halbschalen 3A, 3B gebildet. Die erste Halbschale 3A hat einen Druckluftanschluss 4 zum Einschrauben einer Druckluftleitung, durch die Druckluft in das Innere der Manschette 2 eingeleitet wird. Die zweite Halbschale 3B hat eine Konsole 5, an der eine Halterung 6 befestigt wird. Die Halterung 6 stützt den Aufbau mit dem Relaiselement 1 und ist beispielsweise an einer Wand oder Decke montiert.

Zwischen den Stirnseiten ist im Inneren der Manschette 2 ein Innenrohr 12 angeordnet, das an die Stirnflächen des ersten und zweiten Rohrendes 10, 11 anschließt. Wie in der Detailansicht von Fig. 3 dargestellt, sind über den gesamten Umfang des Innenrohrs 12 in radiale Richtung verlaufende Durchgänge 18 ausgebildet. Durch die Durchgänge 18 strömt Druckluft von der Außenseite des Innenrohrs, d.h. von der Innenseite der Manschette 2 her kommend, in das Innere des Innenrohrs 12 und damit in den zwischen den Rohrenden 10, 11 transportierten Feststoff. Je nach Anwendung kann es auch genügen, mittels des angelegten Druckmediums lediglich Druckimpulse durch die Durchgänge 18 auf den Feststoff zu übertragen. Im dargestellten Beispiel sind die Durchgänge 18 konische Bohrungen, deren Durchmesser sich zur Innenseite hin aufweitet. Es können jedoch auch Bohrungen mit konstantem Durchmesser vorgesehen werden, oder Bohrungen, deren Durchmesser sich zur Innenseite hin verjüngt. Bei einer weiteren, nicht dargestellten Ausgestaltung sind die Bohrungen in Förderrichtung geneigt, so dass die zugeführte Druckluft einen zusätzlichen Impuls in Förderrichtung überträgt.

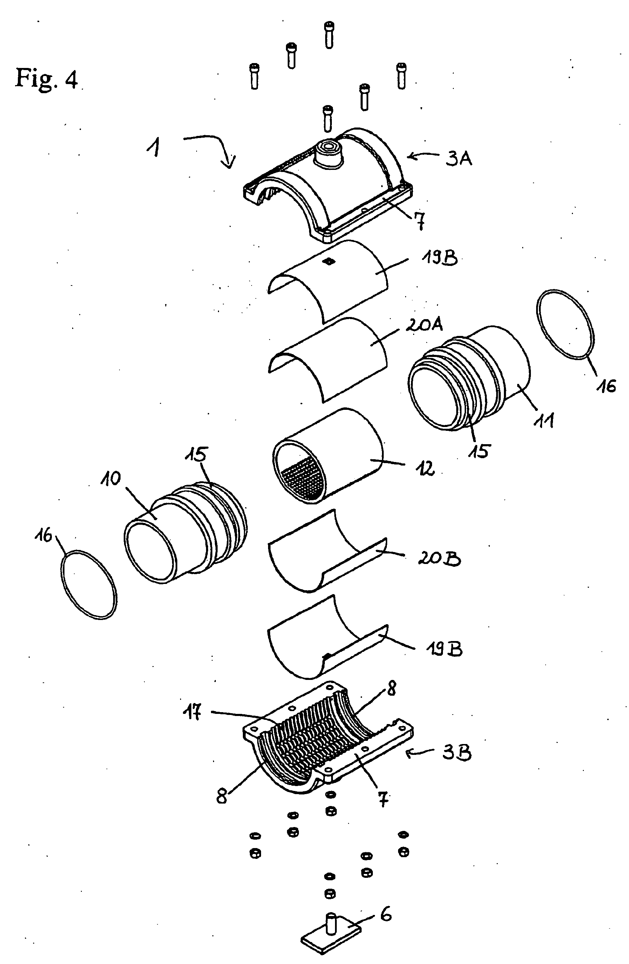

Wie aus der Seitenansicht der Fig. 1B und der Explosionsdarstellung in Fig. 4 ersichtlich, weisen die erste und zweite Halbschale 3A, 3B jeweils an den Schenkelenden Vorsprünge 7 auf, die durch Schrauben gegeneinander verschraubt werden, so dass die Halbschalen der Manschette 2 die Rohrenden 10 und 11 dicht umschließen. Nicht dargestellt sind Dichtelemente an den Stirnflächen der Vorsprünge zum Abdichten der verschraubten Halbschalen gegen ein Austreten des Druckmediums.

An den Rohrenden 10, 11 sind umlaufende Flansche 15 bzw. jeweils ein umlaufender Sims ausgebildet, der durch eine gepaarte, an der Innenseite der ersten und zweiten Halbschale 3A, 3B umlaufenden Ringnut 8 formschlüssig umfasst wird. Durch den Formschluss zwischen dem ersten Rohrende 10 und der Manschette 2 sowie zwischen der Manschette 2 und dem zweiten Rohrende 11 wird eine axiale Verschiebung dieser Elemente zueinander verhindert. Weiterhin ist im Überlappungsbereich zwischen dem äußeren Ende der Manschette 2 und den Rohrenden 10, 11 am Innenumfang der Manschette 2 eine Ringnut ausgebildet, in die jeweils ein O-Ring 16 eingesetzt ist. Der O-Ring 16 verhindert einen Druckverlust vom Rohrleitungsinneren zur Außenseite. Ein oder mehrere O-Ringe können an einer beliebigen Stelle im Überlappungsbereich zwischen der Manschette 2 und dem jeweiligen Rohrende 10, 11 vorgesehen sein. In Abwandlung kann bei ausreichendem Kraftschluss zwischen Manschette und Rohrende 10, 12 auf den Formschluss verzichtet werden, oder der Formschluss zwischen der Manschette 2 und den Rohrenden 10, 11 wird beispielsweise durch lediglich drei axial verlaufende Vorsprünge an der Manschette 2 sowie mit einem Greifelement und einem entsprechend ausgeformten Vorsprung an der Rohraußenseite hergestellt.

Wie in der Detailansicht von Fig. 3 und in der Explosionsdarstellung von Fig. 4 dargestellt, verlaufen in Umfangsrichtung an der Innenseite der Halbschalen 3A, 3B Ringnuten 17, die durch Durchbrüche miteinander in Verbindung stehen. Über die Ringnuten 17 und deren Durchbrüche verbreitet sich die durch den Druckluftanschluss 4 zugeführte Druckluft im Bereich des Innenrohrs 12. Zwischen der Innenseite der Halbschalen 3A, 3B und der Außenseite des Innenrohrs sind von außen her kommend ein Lochblech 19 und ein Filter 20 angeordnet. Diese umschließen, wie in Fig. 4 dargestellt, wiederum als Halbschalen das Innenrohr 12. Es kann aber auch vorgesehen sein, dass das Lochblech und das Filter 20 in Hülsenform oder als Umwicklung um das Innenrohr 12 aufgeschoben und dann montiert werden.

Zur Montage des Relaiselements 1 bzw. des Aktivators in einer Rohrleitung wird die Rohrleitung an der gewünschten Stelle aufgetrennt, ein Rohrleitungsstück entsprechend der Länge des Innenrohrs 12 herausgenommen und die Rohrenden 10, 11 mit dem Flanschansatz 15 versehen. Ein mit den Bohrungen 18 versehenes Innenrohr 12 wird mit dem Lochblech 19 und dem Filter 20 umhüllt und anschließend werden die Halbschalen 3A, 3B der Manschette 2 über dem Innenrohr und den Rohrenden 10, 11 angelegt und verschraubt. Das Innenrohr 12 kann beispielsweise ein aus dem Rohrleitungssystem herausgetrenntes Rohrleitungsstück sein, das nach Bearbeitung (Bohren der Durchgänge 18) wieder verwendet wird. Das Innenrohr 12 kann aus dem gleichen Material wie das anschließende Rohrmaterial sein oder beispielsweise aus einem dickwandigeren Material, das den mechanischen Belastungen besser standhält. Die Flanschansätze 15 bzw. die Simse werden an den Rohrenden 10, 11 aufgeschweißt oder aufgeklebt. Das Rohr kann aus Kunststoff oder Metall sein, wie z.B. aus rostfreiem Edelstahl. Die Manschette kann beispielsweise ein Gussteil sein. Das Filter 20 kann beispielsweise ein Kunststoffgewebe sein, ein Stoffgewebe, ein gesintertes (Keramik-oder Kunststoff-) Material oder dergleichen. Die Feinheit der Poren des Filters liegt in Abhängigkeit des transportierten Feststoffs unterhalb des kleinsten Durchmessers des Feststoffs, beispielsweise unterhalb von 10µm, vorteilhaft zwischen 1 und 2 µm.

Zur Wartung des Relaiselements 1 werden die Halbschalen 3A, 3B gelöst und das Innenrohr mit dem Lochblech 19 und dem Filter 20 wird beispielsweise gegen ein Austauschteil ausgetauscht. Dabei kann beispielsweise auch ein Wechsel gegen ein feinmaschigeres Filtermaterial stattfinden, falls ein feinkörnigerer Feststoff zu transportieren ist.

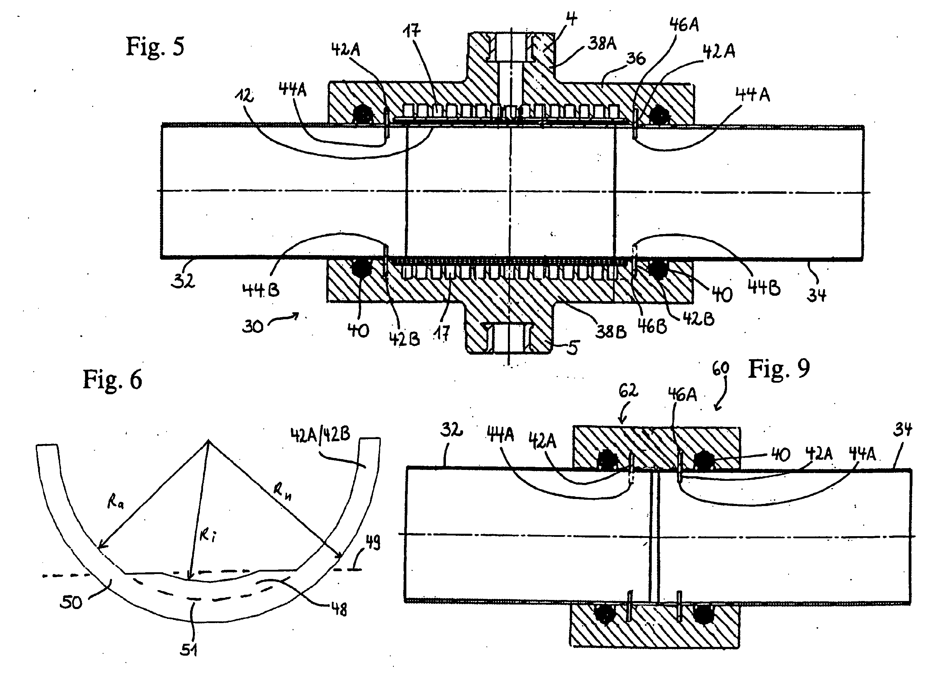

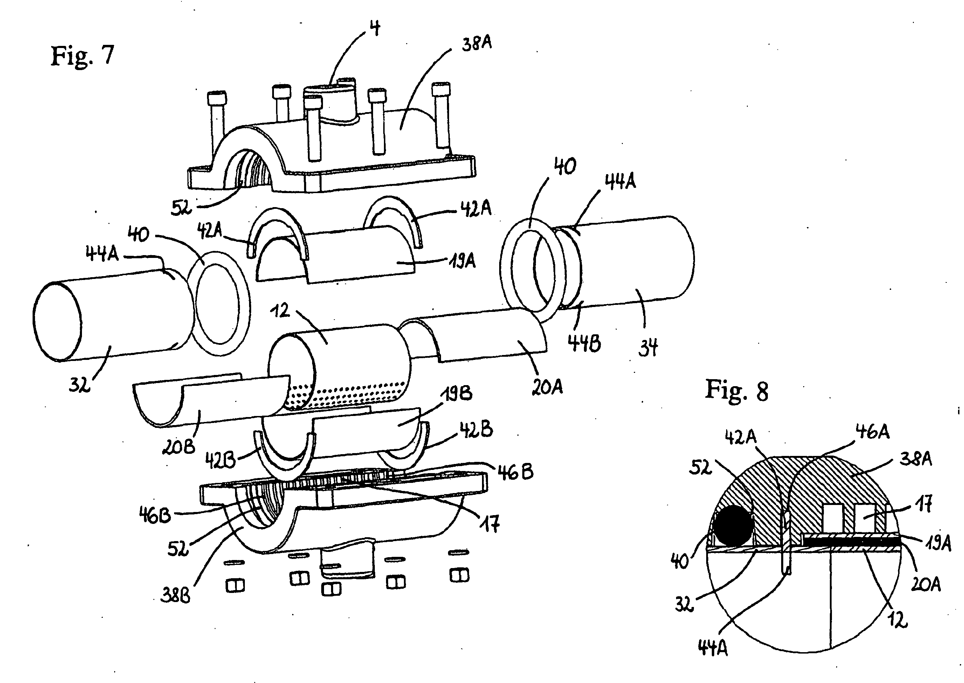

Die Figuren 5 bis 8 zeigen eine Ausgestaltung des in Fig. 1A bis 4 gezeigten Aktivators 1. Fig. 5 zeigt den Aktivator 30 im Querschnitt und Fig. 7 zeigt eine Explosionsdarstellung des Aktivators 30, aus der die Einzelelemente besser ersichtlich sind. Der Innenaufbau des in Fig. 5 dargestellten Aktivators 30 entspricht im wesentlichen dem Innenaufbau des Aktivators 1, so dass auf eine detaillierte Beschreibung hier verzichtet und auf die obigen Ausführungen verwiesen wird. Für gleiche oder gleich wirkende Elemente werden ohne weitere Erläuterung die gleichen Bezugszeichen verwendet. Im wesentlichen unterscheidet sich der Aktivator 30 vom Aktivator 1 durch die Verbindung zwischen den Rohrenden 32, 34 und der Manschette 36. Die Manschette 36 des Aktivators 30 ist ebenfalls aus einer ersten und zweiten Halbschale 38A, 38B zusammengesetzt. Die Manschette 36 verbindet ein erstes Rohrende 32 mit einem zweiten Rohrende 34.

Eine Abdichtung zwischen der Außenseite der Rohrenden 32, 34 und den Halbschalen 38A, 38B erfolgt über einen auf die Außenseite der Rohrenden 32, 34 aufgezogenen O-Ring 40. Der O-Ring wird an den Rohrenden 32, 34 so positioniert, dass er beim Zusammensetzten der Halbschalen 38A, 38B in an der Innenseite der Halbschalen verlaufenden Nuten 52 zu liegen kommt. In axiale Richtung versetzt zu den Stirnflächen aber parallel verlaufend dazu sind an der Ober- und an der Unterseite der Rohrenden 32, 34 ein oberer Schlitz 44A und ein unterer Schlitz 44B ausgebildet. Die Schlitze 44A, 44B werden beispielsweise durch Ansägen der Rohrenden oder durch teilweises Trennschneiden ausgebildet und erfindungsgemäß ist der Schlitzboden parallel versetzt zu einer Tangente, die in der Mitte des Schlitzes am Rohrmantel verläuft (vgl. die in Fig. 6 dargestellte Form des Halbrings 42A, B mit der gestrichelten Linie 49).

In den oberen und unteren Schlitz 44A, B werden jeweils ein oberer Halbring 42A und ein unterer Halbring 42B eingesteckt, die in Fig. 6 im Detail in Seitenansicht dargestellt sind. Jeder Halbring ist aus einem Außenbogen 50 und einem kürzeren Innenbogen 48 ausgebildet, wobei der Außenbogen 50 in etwa die Form eines Halbrings hat, während der Innenbogen 48 exakt oder ungefähr der Stirnfläche der Rohrwand entspricht, die den Schlitz 44A bzw. 44B seitlich begrenzt. Mit der gestrichelt dargestellten Linie 49 ist die Bodenebene der Schlitze 44A, 44B in den Rohrenden 32, 34 angedeutet, während der gestrichelte Bogen 51 andeutet, bis zu welcher Tiefe die Halbringe 42A, 42B in die Schlitze 44A, 44B eintauchen. Demnach taucht der Innenbogen 48 vollständig in die Schlitze 44 ein, während der Außenbogen 50 über die Außenfläche der Rohrenden 32, 34 hervorsteht. Der in Fig. 6 dargestellte Radius Rₐ entspricht dem Außenradius der Rohrenden, der Radius Rᵢ entspricht dem Innenradius der Rohrenden und der Radius Rₙ entspricht ungefähr dem größten Radius einer Innennut, wobei die Innennut 46A an der Innenseite der ersten Halbschale 38A und die Innennut 46B an der Innenseite der zweiten Halbschale 38B ausgebildet ist.

Fig. 8 zeigt eine Detailansicht aus der Querschnittdarstellung von Fig. 5, aus der ersichtlich ist, dass der obere Halbring 42A zur Innenseite hin bündig mit der Rohrinnenwand schließt und die Außenseite des Halbrings in der an der Innenseite der ersten Halbschale 38A der Manschette 36 ausgebildeten Innennut 46A liegt.

Nachdem die O-Ringe 40 auf die Rohrenden 32, 34 aufgezogen und die Halbringe 42A, 42B in die entsprechenden Schlitze 44A, 44B an den Rohrenden eingesteckt sind, werden die beiden Halbschalen 38A, 38B aus gegenüberliegenden Richtungen radial zu den Rohrenden aufeinander zubewegt und miteinander verschraubt, wobei die O-Ringe 40 in den Nuten 52 zu liegen kommen und die Halbringe 42A, 42B in den Innennuten 46A und 46B der jeweiligen Halbschale 38A, 38B. Damit erfolgt eine besonders stabile axiale Festlegung der Rohrenden 32, 34 in der Manschette 36. Selbst bei sehr dünnen Halbringen 42A, 42B, d. h. dünnen Schlitzen 44A, 44B, wird aufgrund der gegen eine Abscherung wirkenden Kraft der Halbringe eine ausreichende Stabilität gewährleistet.

Fig. 9 zeigt einen Querschnitt durch einen Rohrverbinder 60, der die Verbindungs- und Dichtelemente 42A, 42B, 44A, 44B, 46A, 46B, 40 und 52 wie der Aktivator 30 aufweist. Eine zweiteilige Manschette 62 des dargestellten Rohrverbinders 60 baut kürzer als die Manschette 36, da der für den Aktivatorbetrieb notwendige Innenaufbau wie Lufteinspeisung, Luftverteilung und Filterung nicht notwendig ist. Wie dargestellt stehen sich die Stirnseiten der Rohrenden 32, 34 mit einem Spalt gegenüber. Die Dimensionierung kann auch so erfolgen, dass die Rohrenden spaltfrei aufeinanderstoßen oder der Spalt durch ein zu den Rohrabmessungen passendes Rohrstück überbrückt ist - ähnlich dem Innenrohr 12, jedoch ohne Durchgänge 18. In weiterer, nicht dargestellter Ausgestaltung kann die Manschette 2, 36 wie dargestellt zwei Aufnahmen für zwei Rohrenden oder lediglich eine Aufnahme für ein Rohrende aufweisen. Eine weitere Aufnahme kann z.B. zur Aufnahme eines Stutzens an einem Behälter ausgebildet sein. Oder die Manschette kann mehr als zwei Aufnahmen zur Aufnahme von mehr als zwei Rohrenden aufweisen.

Die in den Rohrleitungen 10, 11, 12, 32, 34 zu fördernden Medien können förderfähige Feststoffe, Gase, Flüssigkeiten, Hydraulikmedien oder Gemische davon sein, wie Suspensionen, Emulsionen oder dergleichen. In den Aktivator 1, 30 können als Förder-oder Druckmedium Gase, Flüssigkeiten, Hydraulikmedien oder Gemische davon (z.B. Suspensionen, Emulsionen oder dergleichen) eingeleitet werden.

### BEZUGSZEICHENLISTE:

- 1: Relaiselement / Aktivator
- 2: Manschette / Muffe
- 3A, 3B: erste, zweite Halbschale
- 4: Druckluftanschluss
- 5: Konsole
- 6: Halterung
- 7: Vorsprung
- 8: Nut
- 10: erstes Rohrende
- 11: zweites Rohrende
- 12: Innenrohr
- 15: Flansch
- 16: O-Ring
- 17: Ringnut
- 18: Durchgang
- 19: Lochblech
- 20: Filter
- 30: Aktivator
- 32: erstes Rohrende
- 34: zweites Rohrende
- 36: Manschette
- 38A, B: erste, zweite Halbschale
- 40: O-Ring
- 42A: oberer Halbring
- 42B: unterer Halbring
- 44A: oberer Schlitz
- 44B: unterer Schlitz
- 46A: Innennut (Oberschale)
- 46B: Innennut (Unterschale)
- 48: Innenbogen
- 50: Außenbogen
- 52: Nut für O-Ring
- 60: Rohrverbinder
- 62: Verbindungsmanschette

## Patentansprüche

1. Rohrverbindungsanordnung zum Verbinden von zumindest zwei Rohrenden (32, 34), insbesondere von zumindest zwei flanschlosen Rohrenden, mit:
zumindest zwei zu verbindenden Rohrenden (32, 34),
einer zumindest zweiteilig zusammensetzbaren Rohrmanschette (36,62) mit Ausnehmungen zum Aufnehmen der zumindest zwei Rohrenden (32, 34) an deren Außenwand,
zumindest ein Bogenelement (42A, 42B) je Ausnehmung, und
zumindest eine an der Außenwand jedes der Rohrenden (32, 34) ausgebildete Eintiefung (44A, 44B) zur Aufnahme eines oder mehrerer Bogenelemente (42A, 42B) oder eines ersten Teils (48) eines oder mehrerer Bogenelemente,
wobei das zumindest eine Bogenelement (42A, 42B) bei zusammengesetzter Rohrverbindungsanordnung in die Eintiefung (44A, 44B) des jeweiligen Rohrendes eingreift,
wobei die Ausnehmung das jeweilige Rohrende einschließlich der Eintiefung aufnimmt, und
das zumindest eine Bogenelement an der Ausnehmung ausgebildet ist oder an der Ausnehmung anordenbar ist,
**dadurch gekennzeichnet, dass**
das Bogenelement (42A, 42B) zumindest über einen Bogenabschnitt (48) einen dem jeweiligen Innenradius (Rᵢ) des Rohrendes (32, 34) entsprechenden Innenkrümmungsradius aufweist, und/oder
das Bogenelement (42A, 42B) zumindest über einen Bogenabschnitt (50) einen dem jeweiligen Außenradius (Rₐ) des Rohrendes (32, 34) entsprechenden Innenkrümmungsradius aufweist, und dass die Eintiefung(44A, 44B) ein Schlitz ist mit einem Schlitzboden, der parallel zu einer Tangente am Rohrmantel verläuft.

2. Rohrverbindungsanordnung nach Anspruch 1, mit zumindest einer an der Innenseite jeder der Ausnehmungen ausgebildeten Vertiefung (46A, 46B) zur Aufnahme eines zweiten Teils (50) eines oder mehrerer Bogenelemente (42A, 42B),
wobei das zumindest eine Bogenelement (42A, 42B) bei zusammengesetzter Rohrverbindungsanordnung zwischen der Eintiefung (44A, 44B) des jeweiligen Rohrendes und der Vertiefung (46A, 46B) der jeweiligen Ausnehmung gefasst ist.

3. Rohrverbindungsanordnung nach Anspruch 1 oder 2, wobei je Rohrende (32, 34) zumindest ein Dichtelement (40) zwischen dem Außenumfang des jeweiligen Rohrendes und der Innenseite der jeweiligen Ausnehmung angeordnet ist.

4. Rohrverbindungsanordnung nach einem der Ansprüche 1 bis 3, wobei je Rohrende (32, 34) zumindest ein Dichtelement (40), vom Zentrum der Rohrmanschette (36,62) aus gesehen außerhalb und/oder innerhalb des Bogenelements (42A, 42B) angeordnet ist.

5. Rohrverbindungsanordnung nach einem der Ansprüche 1 bis 4, wobei die Rohrmanschette (36,62) als gerade, mehrendige, winkelförmig, bogenförmig, T-förmige oder als kreuzförmige Verbindung ausgebildet ist.

6. Rohrverbindungsanordnung nach einem der Ansprüche 1 bis 5, mit einem in die Rohrmanschette (36,62) zwischen den Rohrenden (32, 34) einsetzbaren Rohrstück (12), wobei die Länge des Rohrstücks (12) kürzer ist als die axiale Länge der Rohrmanschette (36,62) und die über das innerhalb der Rohrmanschette (36,62) angeordnete Rohrstück (12) hinausragenden Enden der Manschette jeweils über einem Rohrende (32, 34) befestigbar sind.

7. Rohrverbindungsanordnung nach Anspruch 6, wobei die Enden des Rohrstücks (12) gepaart oder ungefähr gepaart zu den Rohrenden ausgebildet sind, insbesondere die Enden unterschiedliche Durchmesser aufweisen.

8. Rohrverbindungsanordnung nach Anspruch 6 oder 7, wobei das Rohrstück (12) gerade, mehrendig, winkelförmig, bogenformig, T-förmig oder als Kreuz ausgebildet ist.

9. Verfahren zur Herstellung einer Rohrverbindungsanordnung gemäß einem der Ansprüche 3 bis 8, durch
Ausbilden von der zumindest einen Eintiefung (44A, 44B) anjedem der Rohrenden (32, 34);
Aufbringen von den zumindest einen Dichtelement (40) an jedem Rohrende (32, 34);
Einstecken jeweils eines Bogenelements (42A, 42B) in die ausgebildeten Eintiefungen (44A, 44B); und
Aufbringen der zweiteiligen Rohrmanschette (36,62), wobei die Ausnehmungen der zweiteiligen Rohrmanschette (36,62) die Dichtelemente (40) und die Bogenelemente (42A, 42B) aufnehmen.

## Claims

1. Tube connecting arrangement for connecting of at least two tube ends (32, 34), in particular of at least two flange-less tube ends, comprising:
at least two tube ends (32, 34) to be connected,
an at least two-part composable tube collar (36, 62) having recesses for receiving the at least two tube ends (32, 34) at the outer wall thereof,
at least one arch element (42A, 42B) per recess, and
at least one depression (44A, 44B) formed at the outer wall of each tube end (32, 34) for receiving one or more of the arch elements (42A, 42B) or of a first portion (48) of one or more arch elements,
wherein the at least one arch element (42A, 42B) engages with the depression (44A, 44B) of the respective tube end when the tube connecting arrangement is assembled,
wherein the recess receives the respective tube end including the depression, and
the at least one arch element is formed at the recess or can be arranged at the recess,
**characterized in that**
the arch element (42A, 42B) comprises an inner radius of curvature corresponding at least along an arch section (48) to the respective inner radius (Rᵢ) of the tube end (32, 34), and/or
the arch element (42A, 42B) comprises an inner radius of curvature corresponding at least along an arch section (50) to the respective outer radius (Rₐ) of the tube end (32, 34),
and that the depression (44A, 44B) is a slot having a slot bottom running parallel to a tangent at the tube mantle.

2. Tube connecting arrangement according to claim 1, comprising at least one dent (46A, 46B) formed at the inner side of each of the recesses for receiving of a second portion (50) of one or more arch elements (42A, 42B), wherein the at least one arch element (42A, 42B) is held between the depression (44A, 44B) of the respective tube end and the dent (46A, 46B) of the respective recess when the tube connecting arrangement is assembled.

3. Tube connecting arrangement according to claim 1 or 2, wherein for each tube end (32, 34) at least one sealing element (40) is arranged between the outer circumference of the respective tube end and the inner side of the respective recess.

4. Tube connecting arrangement according to one of claims 1 to 3, wherein for each tube end (32, 34) at least one sealing element (40) is arranged outside and/or within the arch element (42A, 42B) when seen from the center of the tube collar (36, 62).

5. Tube connecting arrangement according to one of claims 1 to 4, wherein the tube collar (36, 62) is formed as straight, multi-ending, angled, arched, T-shaped or as cross-shaped connection.

6. Tube connecting arrangement according to one of claims 1 to 5, comprising a tube piece (12) that can be inserted in the tube collar (36, 62) between the tube ends (32, 34), wherein the length of the tube piece (12) is shorter than the axial length of the tube collar (36, 62) and the ends of the collar extending beyond the tube piece (12) arranged within the tube collar (36, 62) can be fixed over one tube end (32, 34), respectively.

7. Tube connecting arrangement according to claim 6, wherein the ends of the tube piece (12) are formed mating or substantially mating with the tube ends, in particular the ends having different diameters.

8. Tube connecting arrangement according to claim 6 or 7, wherein the tube piece (12) is formed straight, multi-ending, angled, arched, T-shaped or as cross-shaped.

9. Method of manufacturing a tube connection arrangement according to one of claims 3 to 8, by
forming of the at least one depression (44A, 44B) at each one of the tube ends (32, 34);
putting the at least one sealing element (40) at each of the tube ends (32, 34);
inserting one arch element (42A, 42B) into the formed depressions (44A, 44B), respectively; and
putting the two-part tube collar (36, 62), wherein the recesses of the respective two-part tube collar (36, 62) receive the sealing elements (40) and the arch elements (42A, 42B).

## Revendications

1. Agencement de jonction de tubes pour relier au moins deux extrémités de tube (32, 34), en particulier au moins deux extrémités de tube sans brides, avec :
au moins deux extrémités de tube (32, 34) à relier,
un manchon de tube (36, 62) assemblable en au moins deux parties, avec des évidements pour recevoir les au moins deux extrémités de tube (32, 34) par leur paroi extérieure,
au moins un élément coudé (42A, 42B) par évidement, et
au moins un renfoncement (44A, 44B) formé sur la paroi extérieure de chacune des extrémités de tube (32, 34) et destiné à recevoir un ou plusieurs éléments coudés (42A, 42B) ou une première partie (48) d'un ou plusieurs éléments coudés,
sachant que l'élément coudé (42A, 42B) au nombre d'au moins un s'engage dans le renfoncement (44A, 44B) de l'extrémité de tube respective quand l'agencement de jonction de tubes est assemblé,
sachant que l'évidement reçoit l'extrémité de tube respective, y compris le renfoncement,
et que l'élément coudé au nombre d'au moins un est formé sur l'évidement ou peut être disposé sur l'évidement,
**caractérisé en ce que** l'élément coudé (42A, 42B) présente, au moins sur une portion de coude (48), un rayon de courbure intérieure correspondant au rayon intérieur respectif (Rᵢ) de l'extrémité de tube (32, 34), et/ou
l'élément coudé (42A, 42B) présente, au moins sur une portion de coude (50), un rayon de courbure intérieure correspondant au rayon extérieur respectif (Rₐ) de l'extrémité de tube (32, 34),
et **en ce que** le renfoncement (44A, 44B) est une fente, avec un fond de fente qui s'étendant parallèlement à une tangente à l'enveloppe du tube.

2. Agencement de jonction de tubes selon la revendication 1, avec au moins un creux (46A, 46B) formé sur le côté intérieur de chacun des évidements et destiné à recevoir une deuxième partie (50) d'un ou plusieurs éléments coudés (42A, 42B),
dans lequel l'élément coudé (42A, 42B) au nombre d'au moins un est pris entre le renfoncement (44A, 44B) de l'extrémité de tube respective et le creux (46A, 46B) de l'évidement respectif quand l'agencement de jonction de tubes est assemblé.

3. Agencement de jonction de tubes selon la revendication 1 ou 2, dans lequel, à chaque extrémité de tube (32, 34), au moins un élément d'étanchéité (40) est disposé entre la circonférence extérieure de l'extrémité de tube respective et le côté intérieur de l'évidement respectif.

4. Agencement de jonction de tubes selon l'une des revendications 1 à 3, dans lequel, à chaque extrémité de tube (32, 34), au moins un élément d'étanchéité (40) est disposé, considéré depuis le centre du manchon de tube (36, 62), à l'extérieur et/ou à l'intérieur de l'élément coudé (42A, 42B).

5. Agencement de jonction de tubes selon l'une des revendications 1 à 4, dans lequel le manchon de tube (36, 62) est réalisé sous forme de jonction rectiligne, à plusieurs extrémités, angulaire, coudée, en T ou en croix.

6. Agencement de jonction de tubes selon l'une des revendications 1 à 5, avec une pièce tubulaire (12) pouvant être insérée dans le manchon de tube (36, 62) entre les extrémités de tube (32, 34),
dans lequel la longueur de la pièce tubulaire (12) est inférieure à la longueur axiale du manchon de tube (36, 62), et les extrémités du manchon dépassant de la pièce tubulaire (12) disposée à l'intérieur du manchon de tube (36, 62) peuvent être fixées chacune pardessus une extrémité de tube (32, 34).

7. Agencement de jonction de tubes selon la revendication 6, dans lequel les extrémités de la pièce tubulaire (12) sont réalisées appariées ou approximativement appariées aux extrémités de tube, en particulier les extrémités présentent des diamètres différents.

8. Agencement de jonction de tubes selon la revendication 6 ou 7, dans lequel la pièce tubulaire (12) est réalisée rectiligne, à plusieurs extrémités, angulaire, coudée, en T ou en croix.

9. Procédé de fabrication d'un agencement de jonction de tubes selon l'une des revendications 3 à 8, par
formation du renfoncement (44A, 44B) au nombre d'au moins un sur chacune des extrémités de tube (32, 34) ;
mise en place de l'élément d'étanchéité (40) au nombre d'au moins un sur chaque extrémité de tube (32, 34) ;
insertion d'un élément coudé respectif (42A, 42B) dans les renfoncements formés (44A, 44B) ; et
mise en place du manchon de tube (36, 62) en deux parties, sachant que les évidements du manchon de tube (36, 62) en deux parties reçoivent les éléments d'étanchéité (40) et les éléments coudés (42A, 42B).
